# FASCICULE DE BREVET EUROPEEN

(11) **EP 1 225 065 B1**
(45) Date de publication et mention de la délivrance du brevet: **14.12.2005**
(21) Numéro de dépôt: 01500018.5
(22) Date de dépôt: 17.01.2001
(51) Int. Cl.: B60B 17/00

(54) **Roue de chemin de fer**
Eisenbahnrad
Railway wheel

(43) Date de publication de la demande: 24.07.2002
(73) Titulaire: Construcciones y Auxiliar de Ferrocarriles, S.A. - CAF-, 20200 Beasain (Gipuzkoa) (ES)
(72) Inventeur: Fernández Lopetegui, Félix, 20200 Beasain (Gipuzkoa) (ES); Galarza Rodr guez, Aitor, 20012 Donostia-San Sebastián (Gipuzkoa) (ES); Castañares Etxezarreta, Aitor, 20700 Urretxu (Gipuzkoa) (ES)
(74) Mandataire: Schoppe, Fritz

(56) Documents cités:
- EP-A- 0 798 136
- CH-A- 258 209
- DE-A- 2 726 871
- FR-A- 2 485 993
- US-A- 5 039 152

## Description

Lors des années précédentes, le problème, que représente l'action des systèmes de freinage pour la vie en service et les propriétés physiques des roues de chemin de fer, a suscité un intérêt croissant. À l'heure actuelle, il existe plusieurs systèmes de freinage qui s'appliquent aux wagons et aux véhicules ferroviaires. Parmi eux, il faut mentionner les patins de frein agissant directement sur les surfaces de la roue comme, par exemple, la bande de roulement de la jante, les systèmes de freinage par friction sur un disque à cet effet, et les systèmes de freinage électrique avec action directe sur le système de traction, ainsi que des combinaisons de différents systèmes. Chacun d'entre eux a ou peut avoir un effet différent sur la roue ferroviaire mais, en général, la dissipation de la chaleur générée par l'action du système de freinage à travers le volume de la roue est, en principe, un phénomène possible, quel que soit le système, que ce soit par frottement direct des patins sur la roue ou par des phénomènes de blocage ou de patinage de la roue sur le rail. Quoique, pour une moindre part, la présence de phénomènes de glissement de la roue sur le rail se produisant lors des étapes de traction peut également avoir des effets thermiques sur les roues ferroviaires.

Parmi tous les effets possibles que peuvent avoir les systèmes de freinage sur les propriétés de la roue, il faut considérer l'apparition de déplacements irréversibles axiaux de toute la jante ou d'une partie par rapport à la géométrie initiale de solide rigide (dans le sens horizontal et perpendiculaire à celui de marche du train), que ce soit pendant le temps où, étant donné de la chaleur dissipée, la roue se trouve à des températures supérieures à la température ambiante, qu'après, également, le refroidissement jusqu'à cette dernière température. Un deuxième effet possible sur la roue est la variation de la valeur des tensions tangentielles qui existent dans le volume de la jante, du fait de cycles thermiques de freinage ou de freinages intenses d'une durée relativement courte. Cette évolution du champ des tensions modifie, bien évidemment, l'état des tensions tangentielles existant au moment de la fabrication de la roue, dont l'optimisation contribue à minimiser le risque de défaillances des roues en service (et, par conséquent, pour la sécurité en marche du train, qu'un fait de cette nature pourrait supposer.

On connaît déjà des roues qui essaient de résoudre les problèmes mentionnés et permettent d'obtenir une réduction des déplacements irréversibles de la jante grâce à la modification de la géométrie du voile.

Une roue de chemin de fer ayant un voile modifié est connue de EP 0 798 136, où l'on décrit une roue de chemin de fer avec un plan médian perpendiculaire à l'axe XX' de révolution de la roue, et qui présente un voile ayant une première courbure en accord, entre le voile et la jante, se prolongeant par une deuxième courbure en accord entre le voile et le moyeu, la première courbure étant à droite du plan médian et la deuxième à gauche du plan méridien, et de façon symétrique.

Le demandeur considère que cette géométrie n'arrive pas à surmonter suffisamment les problèmes mentionnés et les exigences des chemins de fer modernes.

Le document FR 248 993 A formant l'état de la technique le plus proche selon le préambule de la revendication 1, comprend une roue pleine ayant une faible masse et une haute stabilité de forme dans une direction axiale. La roue pleine présente un voile, un moyeu et une jante, dans laquelle le voile est composé de trois parties courbes selon une fonction cosinusoïdale entre un point où le voile est relié à la jante et le point où le voile est relié au moyeu, dans laquelle le point où le voile est relié à la jante et le point où le voile est relié au moyeu sont disposés dans le plan de contact entre la roue et le rail.

Le document DE 27 26 871 A décrit une roue de chemin de fer présentant un moyeu prévu sur un axe, une jante et un voile qui est formé d'une partie solidaire en forme de S et monté entre le moyeu et la jante.

C'est l'objet de la présente invention que de proposer une roue de chemin de fer améliorée qui pallie les problèmes précités et qui satisfasse les exigences des chemins de fer modernes.

Cet objet est résolu par une roue de chemin de fer selon la revendication 1.

Le demandeur considère qu'il est essentiel de doter la roue d'une flexibilité substantiellement supérieure et, pour cela, il développe une roue qui se caractérise par le fait que le voile présente, entre l'accord du voile avec la jante et l'accord du voile avec le moyeu, une première, une deuxième et une troisième courbures s'enchaînant avec un double point d'inflexion, le plan de la face extérieure de la jante étant, de façon approximative, tangentielle à la surface extérieure de la deuxième courbure du voile.

Avec cette géométrie du voile, les objectifs recherchés de réduction des déformations, de réduction des tensions résiduelles et d'augmentation de la flexibilité visant à absorber les charges d'impact ou vibratoires dans le sens radial, sont atteints.

Le fait que la ligne de charge radiale (charges verticales sur le point (Z) est très proche du point central (T) de l'accord voile-moyeu, permet au moment qu'exerce la charge verticale (permanente dans le train) sur l'accord voile-moyeu d'être très inférieur dans la roue de l'invention à celui de la roue décrite dans l'EP 0798136, en cas d'égalité de charge verticale de la conception. Cette zone d'accord voile-moyeu étant la plus sollicitée en service normal, réduire le moment appliqué sur cette zone (et, par conséquent, l'accroissement des tensions tractives dues à ce moment sur la surface de l'accord) suppose nécessairement un accroissement notable de la résistance à la fatigue mécanique en service de la roue.

Le fait que le point le plus saillant de la face externe du voile coïncide pratiquement avec le plan de la face externe de la jante assure le maximum de flexibilité axiale et radiale au voile, car, si ce point dépassait clairement de ce plan, il pourrait y avoir des problèmes de montage ou des interférences avec d'autres éléments mécaniques.

Comme effet secondaire, on obtient une roue dont la masse est plus réduite que celle des roues connues à l'heure actuelle, pour une même charge maximale par essieu ferroviaire.

La position des deux points d'accord (P), (T) seront, de préférence, du même côté extérieur du plan médian théorique (Z), afin de faciliter la flexibilité et de compenser des flexions des masses jante-moyeu, quoique d'autres positionnements soient admis.

L'apparition de déplacements irréversibles, à chaud ou à froid, de la jante ou de parties de celle-ci dans le sens latéral ou axial, quel qu'en soit le sens, suppose nécessairement une variation de la distance existant entre les faces de la jante et les surfaces latérales du moyeu de la roue et, donc, de la distance entre les faces internes des jantes des roues qui constituent un essieu ferroviaire. Une augmentation de cette distance entre les faces des jantes de roues provoque un frottement excessif des boudins sur les rails et leur usure prématurée. Une diminution de cette distance, pour sa part, accroît le risque de problèmes et même le déraillement au passage du train au niveau d'aiguillages, d'appareils de voie ou de zones de plus grande distance entre les rails. Une manière d'éviter ce problème est la limitation traditionnelle de la charge par essieu et de la vitesse de service, notamment sur les lignes en forte pente, afin de diminuer la dissipation de la chaleur générée par l'action des freins en service normal et lors des arrêts d'urgence. Une autre alternative consiste dans l'introduction d'une géométrie appropriée du voile, qui diminue la tendance à l'apparition de déformations du voile, à chaud ou à froid, ce qui se traduit ultérieurement en déplacements irréversibles de la jante, comme c'est le cas pour le nouveau concept de roue proposé qui, en même temps, présente, comme avantage additionnel, la diminution du poids total de la roue par rapport à d'autres concepts antérieurs.

À part le problème des déplacements irréversibles de jante, décrits aux paragraphes précédents, un deuxième objectif de notre concept de roue présenté ici, est la contention des valeurs des tensions tangentielles dans la jante à un niveau de saturation acceptable. En effet, les roues ferroviaires monobloc sont fabriquées au moyen d'une série de processus tendant à la production de tensions tangentielles négatives dans le volume de la jante, qui génèrent un état compressif de celle-ci, qui tend à la fermer en réduisant son diamètre. Toutefois, des applications intenses ou répétitives des systèmes ou des cycles de freinage sont la cause de la production de chaleur qui, à la suite de l'élévation intense de la température des couches extérieures de la jante de la roue, peut donner lieu, en certaines occasions, à l'apparition de phénomènes de transformation structurale de l'acier qui compose les jantes, et il arrive même, dans les cas les plus extrêmes, qu'apparaissent ded crevasses sur la surface de roulement. En tout cas, et même s'il n'y a pas de transformations intenses, les cycles thermiques conduisent, dans le temps, à une évolution des tensions tangentielles vers des valeurs plus élevées, voire positives, qui tendent, à présent, à ouvrir la jante. Ainsi, de petites crevasses de roulement peuvent avoir un accroissement favorisé par un mécanisme de fatigue pouvant aller jusqu'à provoquer des ruptures ou des pannes importantes dans les roues des véhicules ferroviaires, voire mettre en péril la sécurité de marche du train. Comme il a été auparavant, la contention à des niveaux acceptables de la valeur des tensions tangentielles en service est un second objectif du nouveau modèle de roue proposé. Aussi bien cet objectif que celui de la minimisation du déplacement irréversible de la jante est atteint grâce à une forme de voile de roue innovatrice.

Pour mieux comprendre l'objet de la pre'sente invention, on a représenté sur les plans une forme préférentielle de réalisation pratique, susceptible de changements accessoires qui n'en dénaturent pas le fondement.

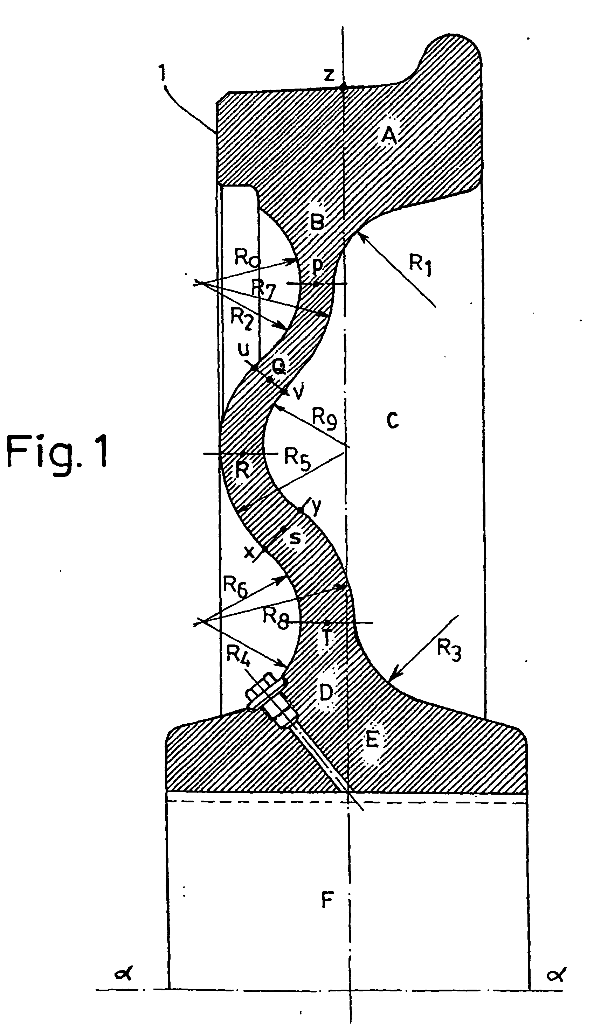

La figure 1 est une vue en coupe verticale d'une réalisation pratique de la roue objet de l'invention.

On décrit ci-dessous un exemple de réalisation pratique, non limitative, de la présente invention.

La roue proposée est du type monobloc (d'une seule pièce, plus les accessoires) et sa forme correspond à celle d'un volume de révolution autour d'un axe central α-α (sauf pour des détails possibles non obtenus au moyennant la révolution autour de cet axe, tels que le ou les trous d'injection d'huile, les marques de fabrication, les trous de foret de fixation d'accessoires tels que bagues d'insonorisation, disques de frein, etc.) Dans la section en coupe montrée à la figure 1, on peut observer les parties essentielles de la roue, notamment la jante (A), l'accord jante-voile (B), le voile ou âme (C), l'accord voile-moyeu (D) et le moyeu (E) avec le trou de calage (F).

La jante (A) peut être du type montré sur la figure ou munis de renfoncements usinés sur un côté ou sur les deux, pour la fixation de bagues d'insonorisation ou tout autre type d'accessoires. Ces bagues peuvent être fixées par interférence avec le renfoncement usiné (calage) ou au moyen d'autres systèmes tels que trous, orifices, etc. pratiqués aussi bien dans la jante que dans d'autres zones de la roue. La présence ou non de limite d'usure est optionnelle et n'intervient pas dans la définition de concept de roue proposé. Le passage de la jante (A) au voile (C) se fait par l'intermédiaire de l'accord (B), qui consiste essentiellement dans l'utilisation d'une géométrie approximativement circulaire sur les deux faces, jusqu'à la hauteur du point (P) où commence le voile (C). Ce point (P) n'est pas nécessairement situé au-dessous du centre de la jante (point de contact théorique roue-rail (Z) sur la bande de roulement), mais plutôt déplacé vers la face extérieure (1) de la roue.

Le fait que le point (P) soit déplacé vers la face intérieure de la roue entre dans l'objet du Brevet.

Le moyeu de roue (E) forme un volume de révolution massif autour de l'axe α-α, sauf du fait du trou de calage (F) et des éléments tels que le ou les trous d'injection d'huile, les trous de foret filetés ou non pour la fixation d'éléments, etc. Le moyeu (E) s'étend jusqu'à l'accord (D) avec le voile, qui consiste, de nouveau, en une surface ayant une géométrie approximativement circulaire, sur les deux côtés de la roue, jusqu'à hauteur du point (T), où commence le voile (C).

Enfin, le voile (C) consiste en un volume massif de révolution autour de l'axe α-α, sauf du fait de la présence possible de trous de foret dans celui-ci, destinés à divers usages. La géométrie de la section en coupe du voile (C) constitue l'innovation de base qui est apportée à cette invention. Cette section est parcourue par une ligne médiane théorique courbe, qui va du point (P) au point (T), en passant successivement par les points (Q), (R) et (S). Cette ligne définit le lieu de points situés à égale distance des deux surfaces ou faces du voile, sur toute sa longueur. La ligne (P) (S) est construite grâce à l'assemblage successif de trois segments courbes, qui sont unis en deux points d'inflexion (Q) et (S).

La définition des points des surfaces extérieures du voile situés "à la hauteur" des points (P), (R) et (T) doit être comprise comme celle des points situés à l'intersection avec les surfaces externes du voile des lignes parallèles à l'axe α-α, chacune d'entre elles passant par le point (Q) ou (S) et le centre de courbure du contour de la surface correspondante (les points (U), (V), (X) et (Y)). Ces définitions s'appliquent aux paragraphes précédents et aux suivants.

Certains rapports entre les différents rayons d'accord sont préférables, dans le but d'obtenir le maximum d'élasticité axiale et radiale du voile, et avec elles, les objectifs finals définis aux paragraphes précédents. De cette façon, le rayon d'accord (R₂) de la face externe du voile entre les hauteurs des points (P) et (Q) est similaire au rayon (R₀) de l'accord jante-voile (B) sur cette face. Ce rayon (R₀) est également similaire au rayon (R₆) de la face externe du voile entre les hauteurs des points (S) et (T), à son tour semblable au rayon (R₄) de courbure de l'accord voile-moyeu (D) sur cette face extérieure. Ces rayons (R₀), (R₂), (R₆), (R₄) peuvent être, en outre, égaux aux rayons (R₁), (R₃), des accords jante-voile (B) et voile-moyeu (B) sur la face interne de la roue. Enfin, le rayon (R₇) d'accord de la face interne entre la hauteur des points (P) et (Q) et le rayon (R₈) d'accord de la même face interne entre la hauteur des points (S) et (T), peuvent également être égaux entre eux. Finalement, les rayons (R₉), (R₅) d'accord des faces interne et externe du voile entre les hauteurs des points (Q) et (S) sont nécessairement différents entre eux. Dans la nouvelle roue qui est proposée, c'est précisément la combinaison appropriée des rayons de courbure des faces internes et externes de chacun des trois tronçons de voile compris entre les points (P) et (T), la position des centres respectifs de courbure et la position de l'ensemble du voile par rapport à la jante et au moyeu, qui permet l'obtention des objectifs proposés. Notamment, grâce à l'utilisation d'une combinaison telle qu'elle permette:
- La triple courbure maximale du voile entre les points (P) et (T), de telle sorte que la face externe du voile, à la hauteur du point (R) coïncide approximativement avec la face externe de la jante, pouvant faire saillie sur celle-ci ou demeurer dans une position légèrement plus intérieure, en fonction des besoins de la conception particulière ou des tolérances de fabrication.
- L'obtention de transitions douces entre les différents tronçons des surfaces externes du voile et de celles-ci avec les accords jante-voile et moyeu-voile.

De préférence, et de façon approximative, les surfaces extérieures des première, deuxième et troisième courbures du voile ont un rayon de courbure similaire. En général, les rapports dimensionnels entre les rayons qui ont été expliqués jusqu'ici sont une préférence et un exemple, sans que cela suppose que l'objet du Brevet ne couvre pas des rapports non-similaires entre les rayons.

On peut dire que, de façon préférentielle, le contour de la surface externe et de la surface interne du voile de la figure 1 correspond à la succession de trois segments circulaires joints doucement. Ce fait n'est pas essentiellement nécessaire, car il peut s'agir de trois segments en ligne courbe de plus grands ordres. Il n'est pas non plus essentiellement nécessaire que les valeurs des rayons de courbure de chacun des six segments, trois pour chaque face, qui constituent le contour du voile soit égales entre elles.

La roue est fabriquée conformément aux normes et aux spécifications actuellement existantes, publiées ou à défaut de publication (par ex., prEN 13262).

Enfin, il faut mentionner que la présence de déviations dimensionnelles dues à des processus de fabrication peuvent faire varier, de manière plus ou moins significative, les dimensions réelles de la roue par rapport aux critères dimensionnels définis dans les paragraphes précédents.

À titre d'application particulière du concept de roue exposé précédemment, on a développé une roue avec un système de freinage par patin sur la bande de roulement, où la charge maximale par essieu est établi, en principe, à 22.5 tonnes (bien qu'il soit possible d'appliquer des charges plus grandes), et dans des conditions de freinage telles qu'elles ont été définies pour cette charge, dans le projet de norme UIC 510-5.

Il s'agit d'une roue fabriquée en acier au carbone au moyen du forgeage et du laminage, avec des surfaces externes complètement usinées. Le diamètre de roulement de la roue dans son état initial (fabrication) est de 920 mm., le point de contact roue-rail (Z) étant situé à 70 mm. de la face interne de la jante. La naissance du voile a lieu au point (P), situé à 15 mm. avec déplacement vers la face extérieure par rapport au point (Z). Les trois tronçons de la face extérieure du voile présentent des rayons de courbure de, successivement, 50, 62.09 et 50 mm. En même temps, les rayons de courbure des trois tronçons de la surface interne du voile sont égaux à 70, 42.66 et 70 mm. Enfin, les rayons d'accord sur les deux faces, externe et interne, entre la jante et le voile, et également entre le voile et le moyeu, sont de 50 mm. L'épaisseur du voile decroît peu à peu, allant de 28 mm. au point (T) à 17 mm. au point (P).

Le point (T) est déplacé de 10 mm. vers l'extérieur par rapport au point (Z) de contact sur la bande de roulement. Les centres de courbure des deux faces du tronçon intermédiaire du voile sont situés sur le même plan, étant séparés de 4.57 mm. La face externe du tronçon intermédiaire, pour sa part, coïncide en son point le plus saillant avec le niveau de la face externe de la jante.

Les résultats obtenus avec cette roue ont été clairement supérieurs à ceux obtenus avec une roue à double courbure.

## Revendications

1. Roue de chemin de fer, qui constitue un solide de révolution autour d'un axe α-α, qui se compose d'une jante (A), d'un moyeu (B) et d'un voile (C) présentant sur la jante un plan médian théorique (Z) qui passe par le point de contact roue-rail et qui est perpendiculaire à cet axe α-α, le voile (C) étant uni à la jante (A) par une surface intérieure d'accord et une surface extérieure d'accord, et le voile (C) étant uni au moyeu (E) par une surface intérieure d'accord et une surface extérieure d'accord permettant de déterminer sur le voile (C) une ligne médiane théorique qui va de l'accord (P) du voile (C) avec la jante (A) à l'accord (T) du voile (C) avec le moyeu (E), ledit voile présente, entre l'accord du voile (C) avec la jante (A) et l'accord du voile (C) avec le moyeu (E) une première, une deuxième et une troisième courbures s'enchaînant avec un double point d'inflexion,
**se caractérisant par le fait que**
le plan de la face extérieure (1) de la jante (A) étant approximativement tangentiel à la surface extérieure de la deuxième courbure du voile (C), et
l'accord (P) du voile (C) avec la jante (A) et l'accord (T) du voile (C) avec le moyeu (E) se trouvent déplacé du plan médian théorique (Z) de contact roue-rail.

2. Roue de chemin de fer, selon la revendication précédente, **se caractérisant par le fait que** l'accord (P) du voile (C) avec la jante (A) et l'accord (T) du voile (C) avec le moyeu (E) se trouvent du même côté extérieur du plan médian théorique (Z) de contact roue-rail.

3. Roue de chemin de fer, selon la première revendication, **se caractérisant par le fait que**, d'une façon approximative, les surfaces externes de la première, de la deuxième et de la troisième courbures du voile ont un rayon de courbure similaire.

4. Roue de chemin de fer, selon la première revendication, **se caractérisant par le fait que**, de façon approximative, les surfaces internes de la première, de la deuxième et de la troisième courbures du voile ont un rayon de courbure similaire.

5. Roue de chemin de fer, selon la première revendication, **se caractérisant par le fait que** la surface externe de la première courbure est un prolongement ayant les mêmes concavité, centre et rayon que la surface externe d'accord jante-voile, et que la surface externe de la troisième courbure est un prolongement ayant les mêmes concavité, centre et rayon que la surface externe d'accord voile-moyeu.

6. Roue de chemin de fer, selon la première revendication, **se caractérisant par le fait que** l'accord (T) du voile (C) avec le moyeu (E) est proche du plan médian (Z).

## Patentansprüche

1. Eisenbahnrad, das einen um eine Achse α-α drehenden Festkörper bildet, der sich aus einer Felge (A), einer Nabe (B) und einem Radkörper (C) zusammensetzt, der auf der Felge eine theoretische Mittelebene (Z) aufweist, die durch den Berührungspunkt zwischen dem Rad und der Schiene führt und zu dieser Achse α-α senkrecht ist, wobei der Radkörper (C) mit der Felge (A) über eine innere Verbindungsfläche und eine äußere Verbindungsfläche verbunden ist, und wobei der Radkörper (C) mit der Nabe (E) über eine innere Verbindungsfläche und eine äußere Verbindungsfläche verbunden ist, die es erlauben, auf dem Radkörper (C) eine theoretische Mittellinie zu bestimmen, die von der Verbindung (P) des Radkörpers (C) mit der Felge (A) bis zu der Verbindung (T) des Radkörpers (C) mit der Nabe (E) reicht, wobei der besagte Radkörper zwischen der Verbindung des Radkörpers (C) mit der Felge (A) und der Verbindung des Radkörpers (C) mit der Nabe (E) eine erste, eine zweite und eine dritte Krümmung aufweist, die sich mit einem doppelten Beugungspunkt verketten,
**dadurch gekennzeichnet, daß**
die Ebene der Außenseite (1) der Felge (A) zu der Außenoberfläche der zweiten Krümmung des Radkörpers (C) ungefähr tangential ist, und
die Verbindung (P) des Radkörpers (C) mit der Felge (A) und die Verbindung (T) des Radkörpers (C) mit der Nabe (E) bezüglich der theoretischen Mittelebene (Z) der Berührung zwischen dem Rad und der Schiene verschoben sind.

2. Eisenbahnrad nach dem vorgehenden Anspruch, **dadurch gekennzeichnet daß** sich die Verbindung (P) des Radkörpers (C) mit der Felge (A) und die Verbindung (T) des Radkörpers (C) mit der Nabe (E) auf derselben Außenseite der theoretischen Mittelebene (Z) der Berührung zwischen dem Rad und der Schiene befinden.

3. Eisenbahnrad nach dem ersten Anspruch, **dadurch gekennzeichnet daß** die äußeren Oberflächen der ersten, der zweiten und der dritten Krümmungen des Radkörpers ungefähr einen ähnlichen Krümmungsradius haben.

4. Eisenbahnrad nach dem ersten Anspruch, **dadurch gekennzeichnet daß** die inneren Oberflächen der ersten, der zweiten und der dritten Krümmungen des Radkörpers ungefähr einen ähnlichen Krümmungsradius haben.

5. Eisenbahnrad nach dem ersten Anspruch, **dadurch gekennzeichnet daß** die äußere Oberfläche der ersten Krümmung eine Verlängerung ist, die dieselben Konkavität, Zentrum und Radius hat, wie die äußere Verbindungsfläche zwischen der Felge und dem Radkörpers, und daß die äußere Oberfläche der dritten Krümmung eine Verlängerung ist, die dieselben Konkavität, Zentrum und Radius hat, wie die äußere Verbindungsfläche zwischen dem Radkörper und der Nabe.

6. Eisenbahnrad nach dem ersten Anspruch, **dadurch gekennzeichnet daß** die Verbindung (T) des Radkörpers (C) mit der Nabe (E) nah bei der Mittelebene (Z) liegt.

## Claims

1. Railway wheel forming a rotation solid about an axis a-a, which is comprised of a rim (A), a hub (B) and a wheel centre (C) having, on the rim, a theoretical median plane (Z) which passes through the point of contact between the wheel and the rail and which is perpendicular to this axis a-a, the wheel centre (C) being united with the rim (A) by an inner connecting surface and an outer connecting surface, and the wheel centre (C) being united to the hub (E) by an inner connecting surface and an outer connecting surface allowing to determine, on the wheel centre (C), a theoretical median line which extends from the connection (P) of the wheel centre (C) with the rim (A) to the connection (T) of the wheel centre (C) with the hub (E), the wheel centre having, between the connection of the wheel centre (C) with the rim (A) and the connection of the wheel centre (C) with the hub (E), a first, a second and a third curvature which are concatenated with a double point of inflection,
**characterized in that**
the plane of the outer face (1) of the rim (A) is approximately tangential to the outer surface of the second curvature of the wheel centre (C), and
the connection (P) of the wheel centre (C) with the rim (A) and the connection (T) of the wheel centre (C) with the hub (E) are offset with regard to the theoretical median plane (Z) of contact between the wheel and the rail.

2. Railway wheel according to the preceding claim, **characterised in that** the connection (P) of the wheel centre (C) with the rim (A) and the connection (T) of the wheel centre (C) with the hub (E) are on the same outer side of the theoretical median plane (Z) of contact between the wheel and the rail.

3. Railway wheel according to claim 1, **characterised in that**, in an approximate way, the outer surfaces of the first, second and third curvatures of the wheel centre have a similar radius of curvature.

4. Railway wheel according to claim 1, **characterised in that**, in an approximate way, the inner surfaces of the first, second and third curvatures of the wheel centre have a similar radius of curvature.

5. Railway wheel according to claim 1, **characterised in that** the outer surface of the first curvature is an extension having the same concavity, centre and radius as the outer connecting surface between the rim and the wheel centre, and **in that** the outer surface of the third curvature is an extension having the same concavity, centre and radius as the outer connecting surface between the wheel centre and the hub.

6. Railway wheel according to claim 1, **characterised in that** the connection (T) of the wheel centre (C) with the hub (E) is close to the median plane (Z).
